# EUROPEAN PATENT APPLICATION

(11) **EP 2 456 113 A2**
(43) Date of publication of application: **23.05.2012**
(21) Application number: 11187646.2
(22) Date of filing: 03.11.2011
(51) Int. Cl.: H04L 1/00

(54) **Error correction methods and apparatus**

(30) Priority: 19.11.2010 JP 2010258569
(71) Applicant: Sony Corporation, Tokyo 108-0075 (JP)
(72) Inventor: Shinbashi, Tatsuo, Minato-ku, Tokyo 108-0075 (JP); Funamoto, Kazuhisa, Minato-ku, Tokyo 108-0075 (JP); Matsumoto, Hideyuki, Minato-ku, Tokyo 108-0075 (JP); Shiroshita, Hiroshi, Minato-ku, Tokyo 108-0075 (JP); Maruko, Kenichi, Minato-ku, Tokyo 108-0075 (JP); Sugioka, Tatsuya, Minato-ku, Tokyo 108-0075 (JP); Koshisaka, Naohiro, Yokohama-Shi, Kanagawa (JP); Sasaki, Shigetoshi, Yokohama-Shi, Kanagawa (JP); Tamori, Masato, Yokohama-Shi, Kanagawa (JP)
(74) Representative: Haines, Miles John L.S.

(57) **Abstract**

A transmitting device includes a setting unit that sets the data length of an error correcting code whose data length is variable, an error correcting code calculator that calculates the error correcting code having the data length set by the setting unit for transmission-subject data as an information word, and a transmitting unit that transmits, to a receiving device existing in the same device, coded data that is data of a codeword obtained by adding the error correcting code obtained by calculation by the error correcting code calculator to the transmission-subject data.

## Description

The present invention relates to transmitting devices, transmitting methods, receiving devices, receiving methods, programs, and transmission systems, and to a transmitting device, a transmitting method, a receiving device, a receiving method, a program, and a transmission system that allow efficient transmission and reception of data in a device.

Along with increase in the volume of information, enhancement in the transmission speed of the interface between signal processing large scale integrated circuits (LSIs) is becoming necessary.

To meet this need, techniques of increase in the number of parallel channels of signal processing, enhancement in the clock frequency of the interface, lowering of the signal voltage are employed. However, if these techniques are employed, the noise resistance is deteriorated and it becomes difficult to correctly transmit data.

If there is a need in an interface to lower the power consumption, e.g. the interface between signal processing LSIs for mobile apparatus, the operating voltage may be lowered, although enhancement in the transmission speed is not strongly required, and it becomes difficult to correctly transmit data.

To solve such a problem, electrical performance improvements in the transmission channel, such as enhancement in the performance of a clock data recovery (CDR) circuit and an equalizer, are made and an error detection code for detection of an error generated due to noise by the receiving side is also used. The LSI on the receiving side that has detected an error requests the LSI on the transmitting side to retransmit the data and the data is transmitted and received again. In this manner, countermeasures against the error are ensured.

An example of the related arts is described in e.g. Serial ATA: High Speed Serialized AT Attachment Revision 1.0a 7-January-2003.

The transmission capacity required for interfaces between signal processing LSIs is increasing. In the related-art method in which data is retransmitted, a data buffer having a comparatively high capacity needs to be prepared in the receiving-side LSI. In addition, if the receiving-side LSI waits for data retransmission, processing in the receiving-side LSI cannot be executed on time. Therefore, this method is becoming impractical.

There is a need for a technique to allow efficient transmission and reception of data in a device.

According to an embodiment, there is provided a transmitting device including setting unit configured to set the data length of an error correcting code whose data length is variable, an error correcting code calculator configured to calculate the error correcting code having the data length set by the setting unit for transmission-subject data as an information word, and a transmitting unit configured to transmit, to a receiving device existing in the same device, coded data that is data of a codeword obtained by adding the error correcting code obtained by calculation by the error correcting code calculator to the transmission-subject data.

According to another embodiment, there is provided a transmitting method including setting the data length of an error correcting code whose data length is variable, calculating the error correcting code having the set data length for transmission-subject data as an information word, and transmitting, to a receiving device existing in the same device, coded data that is data of a codeword obtained by adding the error correcting code obtained by the calculation to the transmission-subject data.

According to another embodiment, there is provided a program for causing a computer to execute processing including setting the data length of an error correcting code whose data length is variable, calculating the error correcting code having the set data length for transmission-subject data as an information word, and transmitting, to a receiving device existing in the same device, coded data that is data of a codeword obtained by adding the error correcting code obtained by the calculation to the transmission-subject data.

According to another embodiment, there is provided a receiving device including a receiving unit configured to receive coded data transmitted from a transmitting device that is provided in the same device. The transmitting device sets the data length of an error correcting code whose data length is variable, calculates the error correcting code having the set data length for transmission-subject data as an information word and transmits the coded data that is data of a codeword obtained by adding the error correcting code obtained by the calculation to the transmission-subject data. The receiving device further includes a setting unit configured to set the data length of the error correcting code, an error correcting unit configured to perform error correction of the transmission-subject data based on the error correcting code that is included in the coded data and has the data length set by the setting unit, and a processing unit configured to execute processing of the transmission-subject data resulting from the error correction.

According to another embodiment, there is provided a receiving method including receiving coded data transmitted from a transmitting device that is provided in the same device. The transmitting device sets the data length of an error correcting code whose data length is variable, calculates the error correcting code having the set data length for transmission-subject data as an information word and transmits the coded data that is data of a codeword obtained by adding the error correcting code obtained by the calculation to the transmission-subject data. The receiving method further includes setting the data length of the error correcting code, performing error correction of the transmission-subject data based on the error correcting code that is included in the coded data and has the set data length, and executing processing of the transmission-subject data resulting from the error correction.

According to another embodiment, there is provided a program for causing a computer to execute processing including receiving coded data transmitted from a transmitting device that is provided in the same device. The transmitting device sets the data length of an error correcting code whose data length is variable, calculates the error correcting code having the set data length for transmission-subject data as an information word and transmits the coded data that is data of a codeword obtained by adding the error correcting code obtained by the calculation to the transmission-subject data. The processing further includes setting the data length of the error correcting code, performing error correction of the transmission-subject data based on the error correcting code that is included in the coded data and has the set data length, and executing processing of the transmission-subject data resulting from the error correction.

According to another embodiment, there is provided a transmission system including a transmitting device and a receiving device. The transmitting device includes a setting unit that sets the data length of an error correcting code whose data length is variable, an error correcting code calculator that calculates the error correcting code having the data length set by the setting unit for transmission-subject data as an information word, and a transmitting unit that transmits, to the receiving device, coded data that is data of a codeword obtained by adding the error correcting code obtained by calculation by the error correcting code calculator to the transmission-subject data. The receiving device includes a receiving unit that receives the coded data, a setting unit that sets the data length of the error correcting code, an error correcting unit that performs error correction of the transmission-subject data based on the error correcting code that is included in the coded data and has the data length set by the setting unit, and a processing unit that executes processing of the transmission-subject data resulting from the error correction.

In the transmitting device, the transmitting method, and the program according to the above-described embodiments of the present disclosure, the data length of the error correcting code whose data length is variable is set and the error correcting code having the set data length is calculated for the transmission-subject data as an information word. Furthermore, the coded data that is data of a codeword obtained by adding the error correcting code obtained by the calculation to the transmission-subject data is transmitted to the receiving device existing in the same device.

In the receiving device, the receiving method, and the program according to the above-described embodiments of the present disclosure, the coded data transmitted from the transmitting device that is provided in the same device is received. The transmitting device sets the data length of the error correcting code whose data length is variable, calculates the error correcting code having the set data length for the transmission-subject data as an information word and transmits the coded data that is data of a codeword obtained by adding the error correcting code obtained by the calculation to the transmission-subject data. In the receiving device, the receiving method, and the program, the data length of the error correcting code is set and the error correction of the transmission-subject data is performed based on the error correcting code that is included in the coded data and has the set data length. Furthermore, processing of the transmission-subject data resulting from the error correction is executed.

In the transmission system according to the above-described embodiment, by the transmitting device, the data length of the error correcting code whose data length is variable is set and the error correcting code having the set data length is calculated for the transmission-subject data as an information word. Furthermore, the coded data that is data of a codeword obtained by adding the error correcting code obtained by the calculation to the transmission-subject data is transmitted to the receiving device. By the receiving device, the coded data transmitted from the transmitting device is received and the data length of the error correcting code is set. Furthermore, the error correction of the transmission-subject data is performed based on the error correcting code that is included in the coded data and has the set data length and processing of the transmission-subject data resulting from the error correction is executed.

Some embodiments allow for more efficient transmission and reception of data in a device.

### BRIEF DESCRIPTION OF THE DRAWINGS

FIG. 1 is a diagram showing a first configuration example of a transmission system;
FIG. 2 is a diagram showing an example of rearrangement of transmission data;
FIG. 3 is a diagram showing an example of error correcting coding;
FIG. 4 is a diagram showing the frame configuration of a transmission frame;
FIG. 5 is a diagram showing an example of error correcting decoding;
FIG. 6 is a flowchart for explaining transmission processing of a transmitting-side block;
FIG. 7 is a flowchart for explaining reception processing of a receiving-side block;
FIG. 8 is a diagram showing a modification example of the configuration of the transmitting-side block and the receiving-side block;
FIG. 9 is a diagram showing a second configuration example of the transmission system;
FIG. 10 is a diagram showing a third configuration example of the transmission system;
FIG. 11 is a diagram showing a fourth configuration example of the transmission system;
FIG. 12 is a diagram showing a fifth configuration example of the transmission system;
FIG. 13 is a flowchart for explaining parity number setting processing of the transmitting-side block;
FIG. 14 is a flowchart for explaining parity number setting processing of the receiving-side block; and
FIG. 15 is a diagram showing a configuration example of a computer.

### DETAILED DESCRIPTION

### <First Embodiment>

### [Block Configuration]

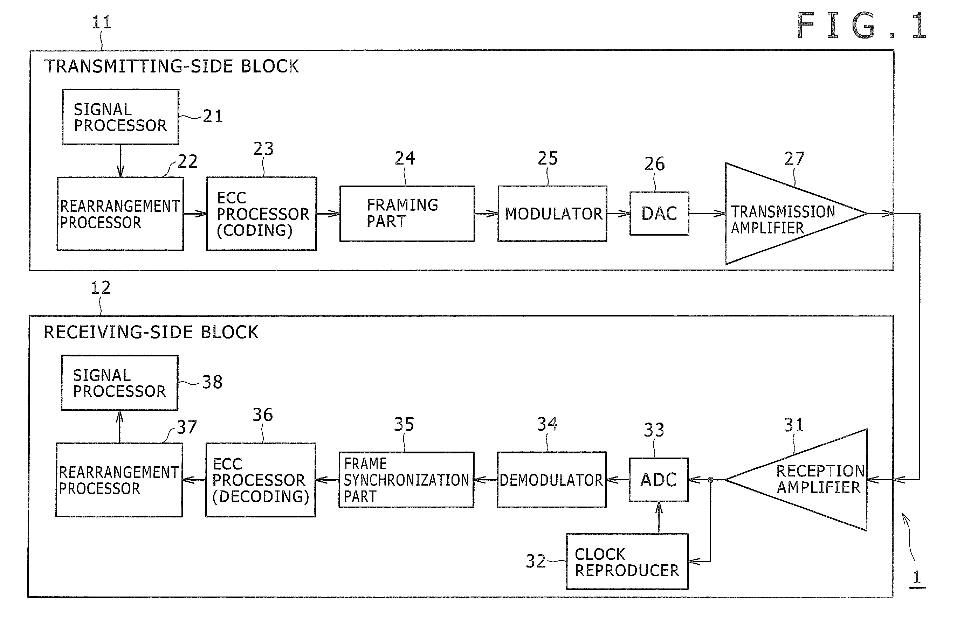

FIG. 1 is a diagram showing a first configuration example of a transmission system according to one embodiment.

A transmission system 1 of FIG. 1 is composed of a transmitting-side block 11 and a receiving-side block 12. For example, the transmitting-side block 11 and the receiving-side block 12 are realized by different LSIs or the same LSI and are provided in the same device that processes information, such as a digital camera, a cellular phone, or a personal computer. In the example of FIG. 1, the transmitting-side block 11 is connected to the receiving-side block 12 via one transmission path. The transmission path between the transmitting-side block 11 and the receiving-side block 12 may be either a wired transmission path or a wireless transmission path.

The transmitting-side block 11 includes a signal processor 21, a rearrangement processor 22, an error correcting code (ECC) processor 23, a framing part 24, a modulator 25, a digital analog converter (DAC) 26, and a transmission amplifier 27.

The signal processor 21 executes various kinds of signal processing and outputs, to the rearrangement processor 22, transmission data that is obtained by executing the signal processing and is the transmission-subject data, such as image data, text data, and audio data.

It is also possible that the transmission data is input to the rearrangement processor 22 from a circuit outside the transmitting-side block 11. For example, pixel data configuring an image taken by an external imaging element such as a complementary metal oxide semiconductor (CMOS) sensor may be input as the transmission data in units of one-pixel data sequentially.

The rearrangement processor 22 acquires the transmission data supplied from the signal processor 21 and rearranges the acquired transmission data. For example, if the transmission data is data in which one symbol is composed of a predetermined number of bits such as 12 bits, this data is converted to data in units of 8 bits in the rearrangement processor 22 through data rearrangement.

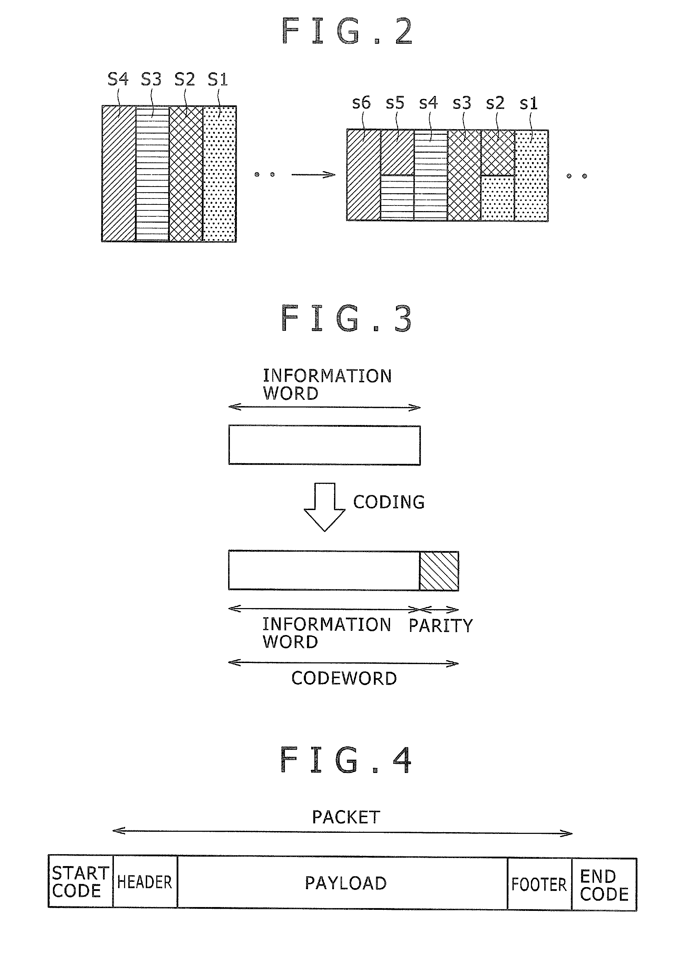

FIG. 2 is a diagram showing an example of the rearrangement of the transmission data.

Four vertically-long blocks shown on the left side of FIG. 2 represent symbols S1 to S4, which are each 12-bit data. The length of each block in the vertical direction represents 12 bits.

For example, if the symbols S1 to S4 are input as the transmission data, the rearrangement processor 22 collects the data in units of 8 bits in the input order and rearranges the input data to symbols s1 to s6 shown at the arrow-indicated part, which are data in units of 8 bits.

The symbol s1 is composed of 8 bits from the first bit to the eighth bit of the symbol S1. The symbol s2 is composed of 8 bits as the total of 4 bits from the ninth bit to the twelfth bit of the symbol S1 and 4 bits from the first bit to the fourth bit of the symbol S2. The symbol s3 is composed of 8 bits from the fifth bit to the twelfth bit of the symbol S2. The symbol s4 is composed of 8 bits from the first bit to the eighth bit of the symbol S3. The symbol s5 is composed of 8 bits as the total of 4 bits from the ninth bit to the twelfth bit of the symbol S3 and 4 bits from the first bit to the fourth bit of the symbol S4. The symbol s6 is composed of 8 bits from the fifth bit to the twelfth bit of the symbol S4.

Each symbol configuring the transmission data is represented by a bit number other than 12 bits in some cases. The rearrangement processor 22 executes processing of re-delimiting data to convert the transmission data to data in units of 8 bits so that a transmission frame can be generated by the same processing in the subsequent-stage processor irrespective of the bit number representing each symbol of the transmission data. The rearrangement processor 22 outputs the transmission data in units of 8 bits obtained by the rearrangement to the ECC processor 23.

The ECC processor 23 calculates an error correcting code used for error correction of the transmission data based on the transmission data in units of 8 bits supplied from the rearrangement processor 22. Furthermore, the ECC processor 23 performs error correcting coding by adding the parity that is the error correcting code obtained by the calculation to the transmission data. As the error correcting code, e.g. the Reed Solomon code is used.

FIG. 3 is a diagram showing an example of the error correcting coding by the ECC processor 23.

The ECC processor 23 applies a predetermined number of transmission data in units of 8 bits as an information word to a generator polynomial and calculates the parity. For example, the parity obtained by the ECC processor 23 is also calculated as data in units of 8 bits. As shown at the part indicated by the white arrow, the ECC processor 23 adds the parity obtained by the calculation to the information word to generate a codeword. The ECC processor 23 outputs coded data as the data of the generated codeword to the framing part 24.

The framing part 24 stores the coded data supplied from the ECC processor 23 in a payload and adds header and footer including information relating to the transmission data to the payload, to thereby generate a packet. Furthermore, the framing part 24 adds a start code representing the start position of the packet data to the beginning of the packet and adds an end code representing the end position of the packet data to the tail end of the packet, to thereby generate a transmission frame.

FIG. 4 is a diagram showing the frame configuration of the transmission frame.

As shown in FIG. 4, one packet is configured through addition of the header and footer to the payload in which the coded data is stored. Furthermore, the transmission frame is configured through addition of the start code and the end code to the packet.

The framing part 24 outputs, to the modulator 25, frame data as the data of the transmission frame having the frame configuration shown in FIG. 4 from the beginning data sequentially.

The modulator 25 modulates the frame data supplied from the framing part 24 by a predetermined system and outputs the modulated frame data to the DAC 26.

The DAC 26 performs D/A conversion for the frame data supplied from the modulator 25 and outputs the analog signal obtained by the D/A conversion to the transmission amplifier 27.

The transmission amplifier 27 adjusts the signal voltage of the signal supplied from the DAC 26 and transmits the adjusted signal.

The receiving-side block 12 includes a reception amplifier 31, a clock reproducer 32, an analog digital converter (ADC) 33, a demodulator 34, a frame synchronization part 35, an ECC processor 36, a rearrangement processor 37, and a signal processor 38. The signal output from the transmission amplifier 27 of the transmitting-side block 11 is input to the reception amplifier 31.

The reception amplifier 31 receives the signal transmitted from the transmitting-side block 11 and adjusts the signal voltage to output the resulting signal. The signal output from the reception amplifier 31 is input to the clock reproducer 32 and the ADC 33.

The clock reproducer 32 provides bit synchronization by detecting the edge of the input signal and reproduces a clock signal based on the edge detection cycle. The clock reproducer 32 outputs the reproduced clock signal to the ADC 33.

The ADC 33 performs sampling of the input signal in accordance with the clock signal reproduced by the clock reproducer 32 and outputs the frame data obtained by the sampling to the demodulator 34.

The demodulator 34 demodulates the frame data by the system corresponding to the modulation system in the modulator 25 of the transmitting-side block 11 and outputs the demodulated frame data to the frame synchronization part 35.

The frame synchronization part 35 detects the start code and the end code from the frame data supplied from the demodulator 34 and provides frame synchronization. The frame synchronization part 35 detects the data from the start code to the end code as packet data and outputs the coded data stored in the payload to the ECC processor 36.

The ECC processor 36 performs error correcting calculation based on the parity included in the coded data supplied from the frame synchronization part 35 to thereby detect an error in the transmission data and correct the detected error.

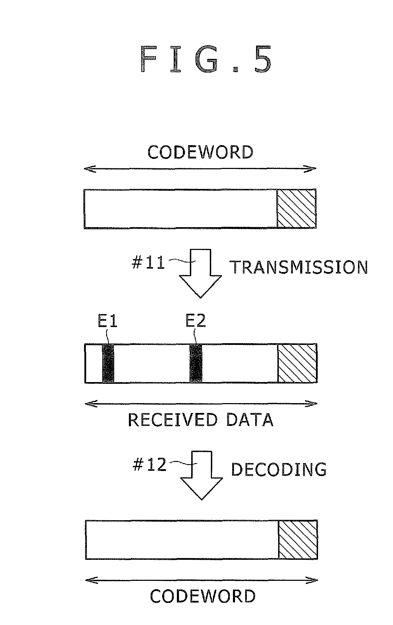

FIG. 5 is a diagram showing an example of error correcting decoding by the ECC processor36.

For example, a description will be made below about the case in which the data of a codeword shown on the upper row of FIG. 5 is transmitted as the coded data from the transmitting-side block 11 and data shown at the part indicated by a white arrow #11 is received. Bits E1 and E2 in the received data in FIG. 5 represent bits including errors.

In this case, the ECC processor 36 performs error correcting calculation based on the parity to thereby detect the bits E1 and E2 and correct the bits as shown by the part indicated by a white arrow #12. The ECC processor 36 performs the error correcting decoding for each codeword and outputs the transmission data resulting from the error correction to the rearrangement processor 37.

The rearrangement processor 37 rearranges the transmission data in units of 8 bits supplied from the ECC processor 36 in the reverse order of the order of the rearrangement by the rearrangement processor 22 of the transmitting-side block 11. That is, in the rearrangement processor 37, reverse processing of the processing described with reference to FIG. 2 is executed and the transmission data in units of 8 bits is converted to transmission data in units of a predetermined bit number such as 12 bits. The rearrangement processor 37 outputs the transmission data obtained by the rearrangement to the signal processor 38.

The signal processor 38 executes various kinds of processing by using the transmission data supplied from the rearrangement processor 37. For example, if the transmission data is pixel data configuring an image of one frame, the signal processor 38 generates the image of one frame based on the pixel data and executes various kinds of processing such as compression of the image data, displaying of the image, and recording of the image data in a recording medium.

### [Operation of Block]

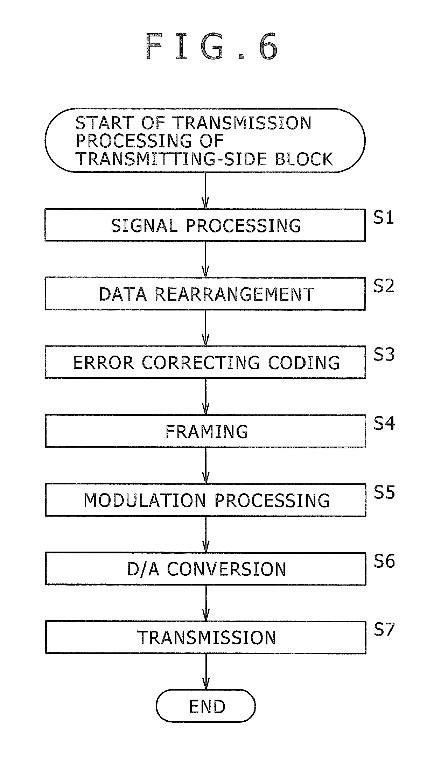

The series of processing of the transmitting-side block 11 and the receiving-side block 12 having the configuration of FIG. 1 will be described below. First, transmission processing of the transmitting-side block 11 will be described with reference to a flowchart of FIG. 6.

In a step S1, the signal processor 21 executes signal processing and outputs transmission data obtained by the signal processing.

In a step S2, the rearrangement processor 22 acquires the transmission data supplied from the signal processor 21 and rearranges the data as described with reference to FIG. 2.

In a step S3, the ECC processor 23 calculates the parity based on the transmission data in units of 8 bits obtained by the rearrangement and adds the parity to the transmission data to thereby perform error correcting coding.

In a step S4, the framing part 24 stores the coded data obtained by the error correcting coding in a payload and adds header and footer to the payload to thereby generate a packet. Furthermore, the framing part 24 performs framing by adding a start code to the beginning of the packet and adding an end code to the tail end.

In a step S5, the modulator 25 executes modulation processing for frame data configuring the transmission frame obtained by the framing.

In a step S6, the DAC 26 performs D/A conversion for the frame data obtained by the modulation processing.

In a step S7, the transmission amplifier 27 transmits the signal obtained by the D/A conversion to the receiving-side block 12. The processing of the steps S2 to S7 is repeatedly executed until the end of transmission of the signal representing the frame data generated based on the transmission data output from the signal processor 21.

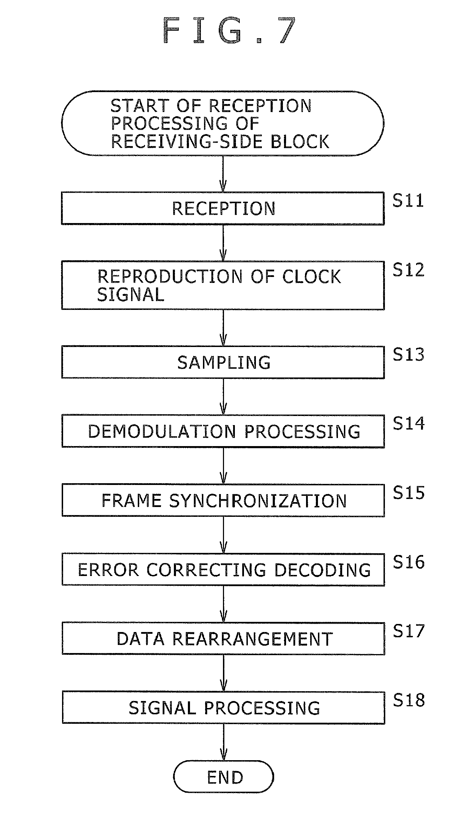

Next, reception processing of the receiving-side block 12 will be described with reference to a flowchart of FIG. 7.

In a step S11, the reception amplifier 31 receives the signal transmitted from the transmitting-side block 11 and adjusts the signal voltage.

In a step S12, the clock reproducer 32 detects the edge of the signal supplied from the reception amplifier 31 and reproduces a clock signal.

In a step S13, the ADC 33 performs sampling in accordance with the clock signal reproduced by the clock reproducer 32.

In a step S14, the demodulator 34 executes demodulation processing for the frame data obtained by the sampling.

In a step S15, the frame synchronization part 35 provides frame synchronization by detecting the start code and the end code from the frame data supplied from the demodulator 34. The frame synchronization part 35 outputs the coded data stored in the payload to the ECC processor 36.

In a step S16, the ECC processor 36 performs error correcting decoding based on the coded data and corrects an error in the transmission data.

In a step S17, the rearrangement processor 37 rearranges the transmission data resulting from the error correction to generate transmission data in units of the same predetermined bit number as that of the data output from the signal processor 21 in the transmitting-side block 11. The processing of the steps S11 to S17 is repeatedly executed until the end of the processing of the signal representing the frame data transmitted from the transmitting-side block 11.

When the processing of the signal representing the frame data is ended, in a step S18, the signal processor 38 executes signal processing based on the transmission data supplied from the rearrangement processor 37. At the end timing of the signal processing, the signal processor 38 ends the processing.

As described above, in the transmission system 1 composed of the transmitting-side block 11 and the receiving-side block 12, an error in the transmission data generated on the transmission path is corrected by using the error correcting code added to the transmission data. Due to this feature, there is no need to request the transmitting-side block 11 to retransmit the transmission data when an error in the transmission data is generated. Thus, with ensuring of countermeasures against the error, the real time characteristic of data transmission can be ensured. Furthermore, because there is no need to provide the transmission path for the retransmission request, simplification of the circuit configuration and cost reduction can be achieved.

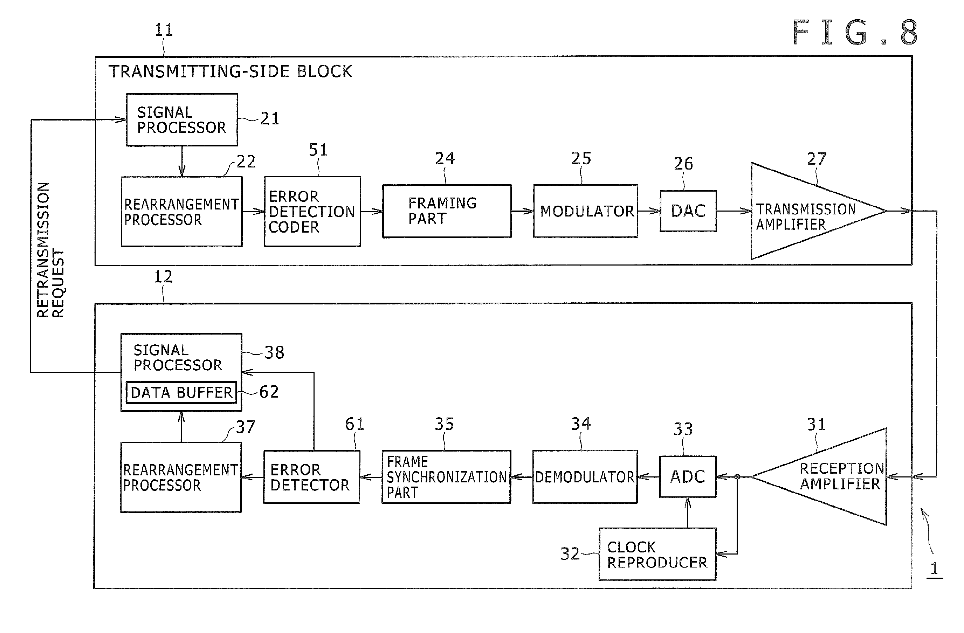

FIG. 8 shows the configuration of the transmitting-side block 11 and the receiving-side block 12 in which the ECC processor is not provided. In the transmitting-side block 11 in FIG. 8, an error detection coder 51 is provided instead of the ECC processor 23. In the receiving-side block 12, an error detector 61 is provided instead of the ECC processor 36.

The error detection coder 51 of the transmitting-side block 11 calculates an error detection code based on transmission data supplied from the rearrangement processor 22 and adds the error detection code obtained by the calculation to the transmission data. Processing similar to the above-described processing is executed in the framing part 24, the modulator 25, the DAC 26, and the transmission amplifier 27 in the transmitting-side block 11, and the transmission data to which the error detection code is added is transmitted to the receiving-side block 12 by using a transmission frame.

For the transmission data supplied to the receiving-side block 12, processing similar to the above-described processing is executed in the reception amplifier 31, the ADC 33, the demodulator 34, and the frame synchronization part 35. As a result, the transmission data to which the error detection code is added is supplied to the error detector 61. The error detector 61 detects an error in the transmission data based on the error detection code and outputs information representing the detection result to the signal processor 38. The information representing the detection result is stored in a data buffer 62 of the signal processor 38.

The signal processor 38 determines whether or not an error in the transmission data is detected based on the information stored in the data buffer 62. If the signal processor 38 determines that an error is detected, it requests the signal processor 21 of the transmitting-side block 11 to retransmit the data.

If the transmitting-side block 11 and the receiving-side block 12 have the configuration shown in FIG. 8, the receiving-side block 12 needs to request the transmitting-side block 11 to retransmit data when a transmission error is generated. Thus, the real time characteristic cannot be ensured and the circuit configuration is also complex.

### <Second Embodiment>

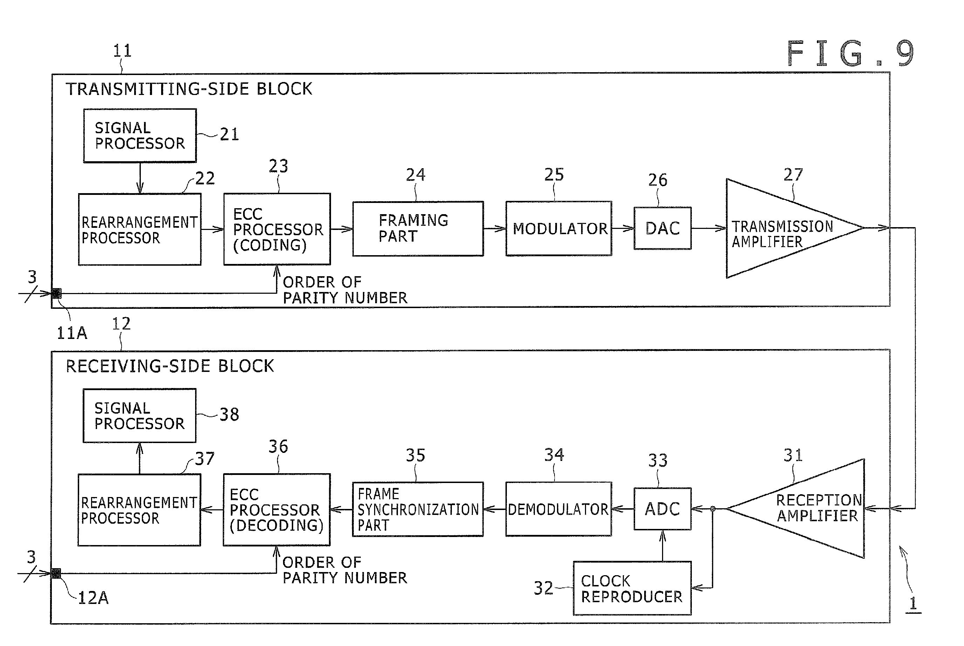

FIG. 9 is a diagram showing a second configuration example of the transmission system 1.

Among the configurations shown in FIG. 9, the same configuration as that shown in FIG. 1 is given the same numeral. Overlapping description is accordingly omitted.

In the transmission system 1 of FIG. 9, the parity number that defines the error correcting capability is variable and can be set from the outside of the block. Parity number order information output from a circuit provided in the same device together with the transmitting-side block 11 and the receiving-side block 12 is input to the ECC processor 23 via an external pin 11A of the transmitting-side block 11 and input to the ECC processor 36 via an external pin 12A of the receiving-side block 12.

The parity number order information is a signal to order the parity number (data length of the parity) selected from e.g. 0,1,2, 3, and 4 bytes. If 0 byte is selected as the parity number, the parity, which is redundant data, is not added but the error correcting capability is absent. If 1 byte is selected as the parity number, only error detection of 1 byte per one codeword is possible. If 2 bytes or 3 bytes are selected as the parity number, error correction of 1 byte per one codeword is possible. If 4 bytes are selected as the parity number, error correction of 2 bytes per one codeword is possible. Although the case in which the parity of 1, 2, 3, or 4 bytes is used as the Reed Solomon code is described here, the parity number is not limited to these sizes.

The ECC processor 23 of the transmitting-side block 11 sets the parity number represented by the parity number order information and performs error correcting coding in such a manner as to add the parity having the set parity number to transmission data. The processing in data transmission by the transmitting-side block 11 is the same as the processing described with reference to the flowchart of FIG. 6.

The ECC processor 36 of the receiving-side block 12 sets the parity number represented by the parity number order information and detects the parity having the set parity number to perform error correction of the transmission data. The processing in data reception by the receiving-side block 12 is the same as the processing described with reference to the flowchart of FIG. 7.

This feature makes it possible to properly set the parity number depending on the error rate of the transmission path and so forth. The error rate of the transmission path depends on the electrical performance of the transmission interface of the transmitting-side block 11, the electrical performance of the transmission interface of the receiving-side block 12, the transmission performance in connection between blocks, the electromagnetic noise environment in the middle of transmission, and so forth. By allowing the parity number to be set after decision of the specifications of the transmitting-side block 11 and the receiving-side block 12 incorporated into the same device instead of fixing the parity number in the designing of the transmitting-side block 11 and the receiving-side block 12, setting the proper parity number later is permitted.

In general, a longer data length of the parity provides higher error correcting capability. However, the parity is redundant data. Thus, transmitting the parity is not preferable in terms of the transmission speed and also increases the power consumption for error correction. Therefore, by permitting the parity number to be variable and be properly set depending on the error rate of the transmission path, high-speed data transmission is enabled and the power consumption can be suppressed.

### <Third Embodiment>

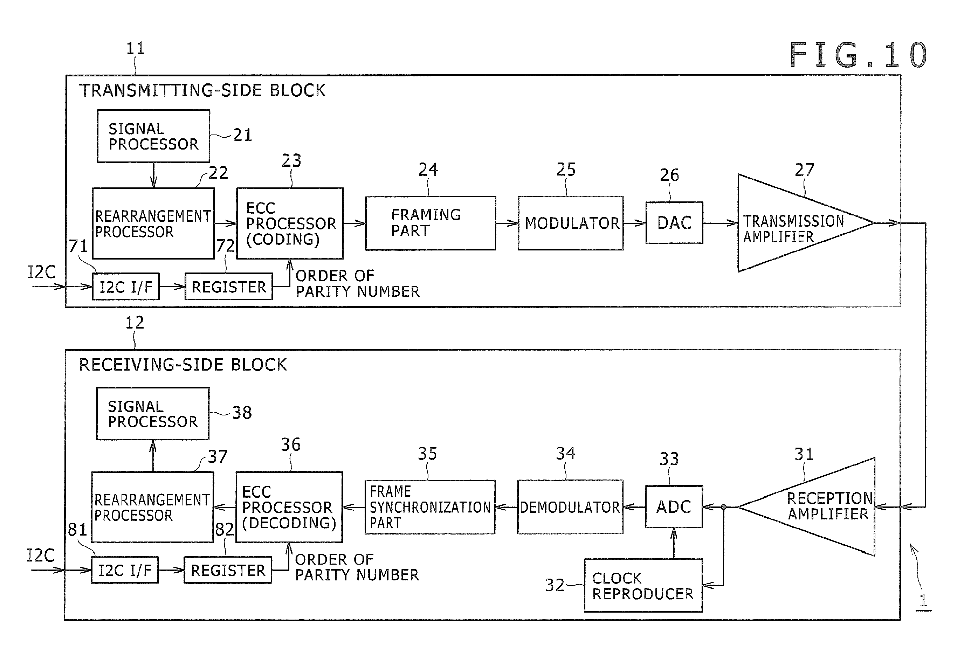

FIG. 10 is a diagram showing a third configuration example of the transmission system 1.

Among the configurations shown in FIG. 10, the same configuration as that shown in FIG. 1 is given the same numeral. Overlapping description is accordingly omitted. The configuration of the transmitting-side block 11 shown in FIG. 10 is different from the configuration in FIG. 1 in that an inter-integrated circuit interface (I2C I/F) 71 and a register 72 are provided, and the configuration of the receiving-side block 12 is different from the configuration in FIG. 1 in that an I2C I/F 81 and a register 82 are provided.

In the transmission system 1 of FIG. 10, the parity number is not set via an external pin of the block but can be set via the I2C interface as the interface of a bus for communication with an external circuit. The parity number order information output from a circuit provided in the same device together with the transmitting-side block 11 and the receiving-side block 12 is stored in the register 72 via the I2C I/F 71 of the transmitting-side block 11 and stored in the register 82 via the I2C I/F 81 of the receiving-side block 12.

The ECC processor 23 of the transmitting-side block 11 reads out the parity number order information stored in the register 72 and performs error correcting coding in such a manner as to add the parity having the parity number represented by the parity number order information to transmission data. The processing in data transmission by the transmitting-side block 11 is the same as the processing described with reference to the flowchart of FIG. 6.

The ECC processor 36 of the receiving-side block 12 reads out the parity number order information stored in the register 82 and detects the parity having the parity number represented by the parity number order information to perform error correction of the transmission data. The processing in data reception by the receiving-side block 12 is the same as the processing described with reference to the flowchart of FIG. 7.

The configuration of FIG. 10 also allows proper setting of the variable parity number depending on the error rate of the transmission path and so forth.

### <Fourth Embodiment>

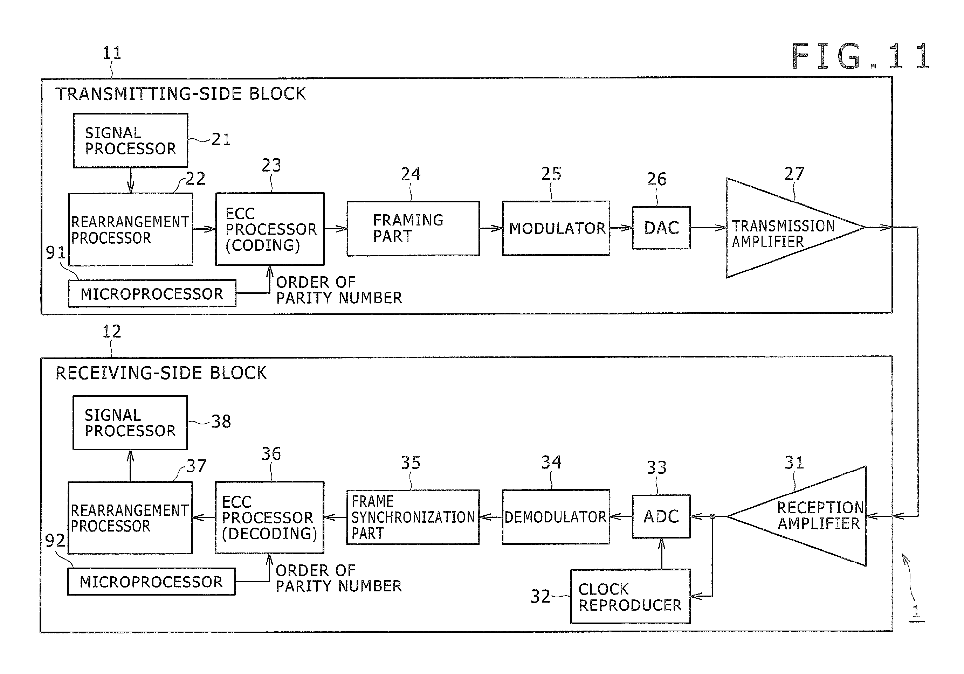

FIG. 11 is a diagram showing a fourth configuration example of the transmission system 1.

Among the configurations shown in FIG. 11, the same configuration as that shown in FIG. 1 is given the same numeral. Overlapping description is accordingly omitted. The configuration of the transmitting-side block 11 shown in FIG. 11 is different from the configuration in FIG. 1 in that a microprocessor 91 is provided, and the configuration of the receiving-side block 12 is different from the configuration in FIG. 1 in that a microprocessor 92 is provided.

In the transmission system 1 of FIG. 11, the parity number is not set via an external pin of the block but can be set from the microprocessor inside the block.

The microprocessor 91 of the transmitting-side block 11 runs a predetermined program (firmware) and outputs the parity number order information representing a predetermined parity number to the ECC processor 23.

The ECC processor 23 sets the parity number in accordance with the parity number order information supplied from the microprocessor 91 and performs error correcting coding in such a manner as to add the parity having the set parity number to transmission data. The processing in data transmission by the transmitting-side block 11 is the same as the processing described with reference to the flowchart of FIG. 6.

The microprocessor 92 of the receiving-side block 12 also runs a program and outputs the parity number order information to the ECC processor 36 similarly. The parity number represented by the parity number order information output by the microprocessor 92 is the same as that represented by the parity number order information output by the microprocessor 91 of the transmitting-side block 11.

The ECC processor 36 sets the parity number in accordance with the parity number order information supplied from the microprocessor 92 and detects the parity having the set parity number to perform error correction of the transmission data. The processing in data reception by the receiving-side block 12 is the same as the processing described with reference to the flowchart of FIG. 7.

The configuration of FIG. 11 also allows proper setting of the parity number depending on the error rate of the transmission path and so forth. It is also possible to change the parity number by updating the firmware of the microprocessor 91 and the microprocessor 92.

### <Fifth Embodiment>

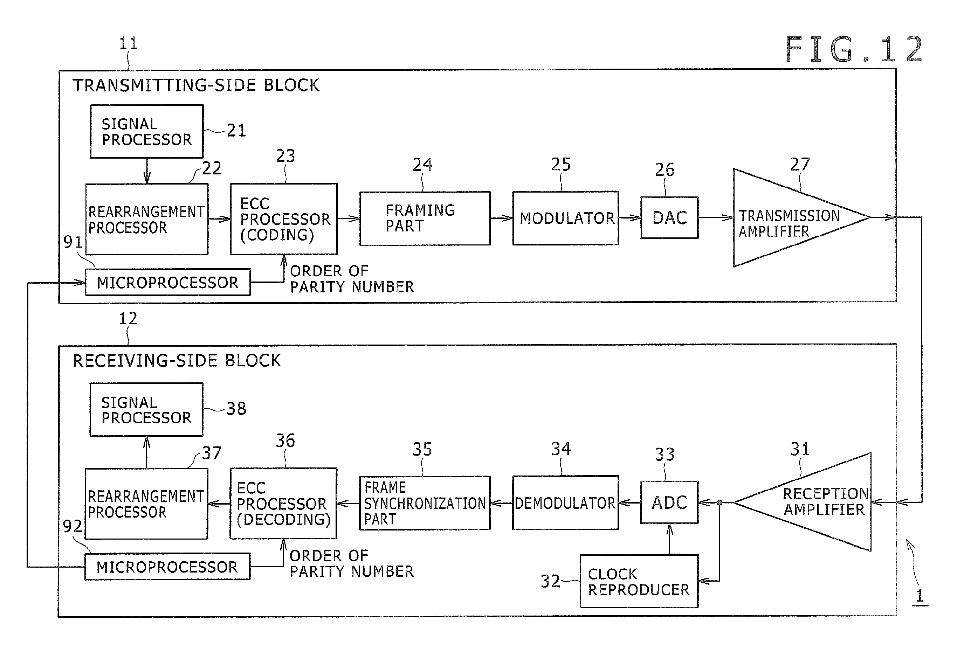

FIG. 12 is a diagram showing a fifth configuration example of the transmission system 1. Among the configurations shown in FIG. 12, the same configuration as that shown in FIG. 11 is given the same numeral. Overlapping description is accordingly omitted.

In the transmission system 1 of FIG. 12, the microprocessor 91 of the transmitting-side block 11 is connected to the microprocessor 92 of the receiving-side block 12 via a signal line. From the microprocessor 92 to the microprocessor 91, e.g. the parity number order information representing the parity number depending on the probability of data error correction detected by the microprocessor 92 is transmitted.

The microprocessor 91 of the transmitting-side block 11 receives the parity number order information supplied from the microprocessor 92 and outputs it to the ECC processor 23.

The ECC processor 23 sets the parity number in accordance with the parity number order information supplied from the microprocessor 91 and performs error correcting coding in such a manner as to add the parity having the set parity number to transmission data.

The microprocessor 92 of the receiving-side block 12 outputs the parity number order information to the ECC processor 36. The parity number represented by the parity number order information transmitted by the microprocessor 92 is the same as that represented by the parity number order information output by the microprocessor 91 of the transmitting-side block 11.

The microprocessor 92 monitors the error correction processing executed by the ECC processor 36 and stores the ratio of the data as the subject of error correction to the received data as the probability of error correction for example. The microprocessor 92 updates the parity number in the ECC processor 23 of the transmitting-side block 11 and the ECC processor 36 of the receiving-side block 12 based on the stored probability of error correction.

For example, if the microprocessor 92 determines that the stored probability of error correction is higher than a threshold and the present parity number cannot ensure the noise resistance, it updates the parity number to a parity number having a longer data length. If the stored probability of error correction is lower than the threshold, the microprocessor 92 updates the parity number to a parity number having a shorter data length. The microprocessor 92 transmits the parity number order information representing the updated parity number to the microprocessor 91.

The ECC processor 36 sets the parity number in accordance with the parity number order information supplied from the microprocessor 92 and detects the parity having the set parity number to perform error correction of the transmission data.

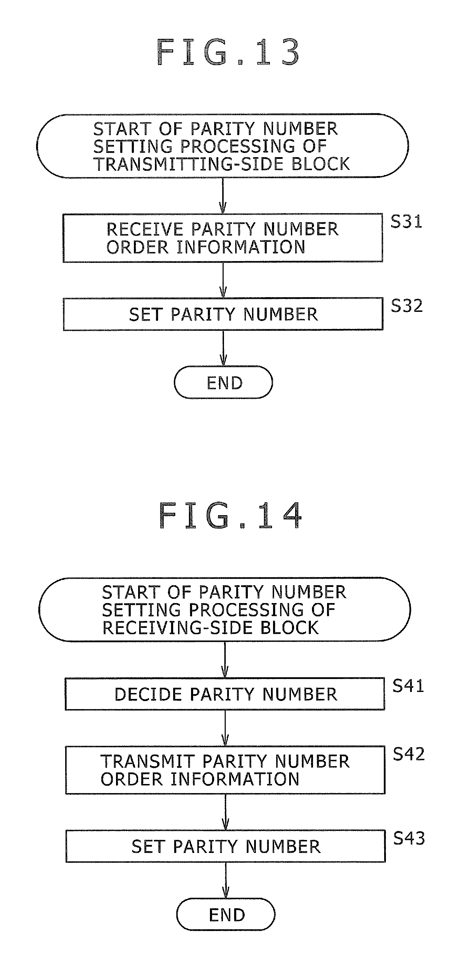

With reference to a flowchart of FIG. 13, parity number setting processing of the transmitting-side block 11 will be described below. The processing of FIG. 13 is repeatedly executed during execution of the processing of FIG. 6 in parallel to the processing of FIG. 6 for example.

In a step S31, the microprocessor 91 of the transmitting-side block 11 receives the parity number order information supplied from the microprocessor 92.

In a step S32, the microprocessor 91 outputs the received parity number order information to the ECC processor 23 and sets the parity number. Thereafter, the processing is ended. In the ECC processor 23, error correcting coding is so performed that the parity having the parity number represented by the parity number order information supplied from the microprocessor 91 is added to transmission data.

Next, with reference to a flowchart of FIG. 14, parity number setting processing of the receiving-side block 12 will be described below. The processing of FIG. 14 is repeatedly executed during execution of the processing of FIG. 7 in parallel to the processing of FIG. 7 for example.

In a step S41, the microprocessor 92 of the receiving-side block 12 monitors error correction in the ECC processor 36 and decides a new parity number based on the probability of error correction.

In a step S42, the microprocessor 92 transmits the parity number order information representing the decided updated parity number to the microprocessor 91.

In a step S43, the microprocessor 92 outputs the parity number order information representing the updated parity number to the ECC processor 36 and sets the parity number. Thereafter, the processing is ended. In the ECC processor 36, the parity having the party number represented by the parity number order information supplied from the microprocessor 92 is detected and error correction of the transmission data is performed.

In this manner, autonomous setting of the error correcting capability depending on the actual transmission status is enabled by providing the channel of signal return from the receiving-side block 12 to the transmitting-side block 11.

### [Configuration Example of Computer]

The above-described series of processing can be executed by hardware and can be executed also by software. In the case of executing the series of processing by software, a program configuring this software is installed from a program recording medium into e.g. a computer incorporated into dedicated hardware or a general-purpose personal computer.

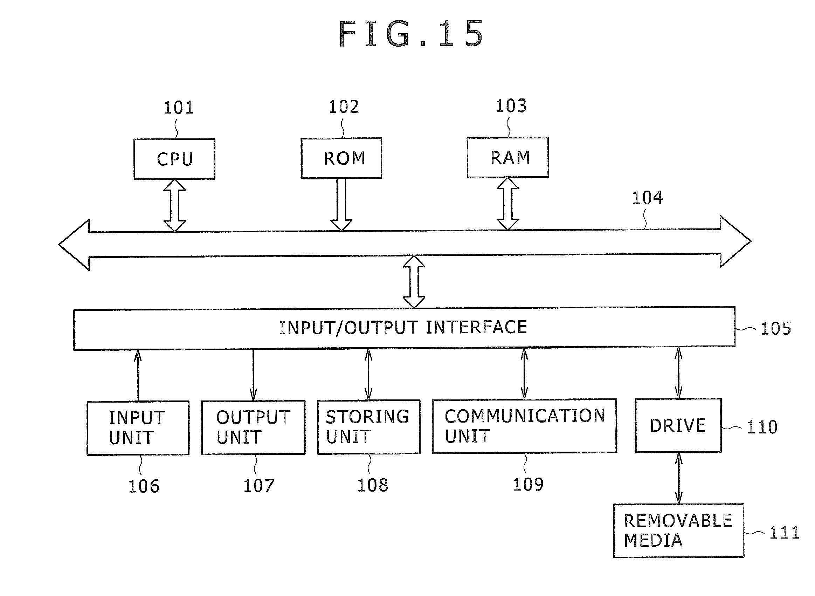

FIG. 15 is a block diagram showing a configuration example of the hardware of a computer that executes the above-described series of processing by a program.

A central processing unit (CPU) 101, a read only memory (ROM) 102, and a random access memory (RAM) 103 are connected to each other by a bus 104.

An input/output interface 105 is connected to the bus 104. To the input/output interface 105, an input unit 106 composed of keyboard, mouse, etc. and an output unit 107 composed of display, speaker, etc. are connected. Furthermore, to the input/output interface 105, a storing unit 108 composed of hard disk, non-volatile memory, etc., a communication unit 109 composed of a network interface, etc., and a drive 110 that drives a removable media 111 are connected.

in the computer having the above-described configuration, for example the CPU 101 loads a program stored in the storing unit 108 into the RAM 103 via the input/output interface 105 and the bus 104 and runs the program. Thus, the above-described series of processing is executed.

The program run by the CPU 101 is recorded in the removable media 111 or provided via a wired or wireless transmission medium such as a local area network, the Internet, or digital broadcasting for example so as to be installed into the storing unit 108.

The program run by the computer may be a program executed in a time-series manner along the order described in the present specification or may be a program executed in parallel or at the necessary timing such as timing when a call is made.

Embodiments of the present disclosure are not limited to the above-described embodiments and various changes can be made without departing from the scope of the present disclosure.

The present application contains subject matter related to that disclosed in Japanese Priority Patent Application JP 2010-258569 filed in the Japan Patent Office on November 19, 2010, the entire content of which is hereby incorporated by reference.

## Claims

1. A transmitting device comprising:
a setting unit configured to set data length of an error correcting code whose data length is variable;
an error correcting code calculator configured to calculate the error correcting code having the data length set by the setting unit for transmission-subject data as an information word; and
a transmitting unit configured to transmit, to a receiving device existing in the same device, coded data that is data of a codeword obtained by adding the error correcting code obtained by calculation by the error correcting code calculator to the transmission-subject data.

2. The transmitting device according to claim 1, wherein
the setting unit sets the data length of the error correcting code in accordance with a signal input from an external to an input terminal of a circuit configuring the transmitting device.

3. The transmitting device according to claim 1, wherein
the setting unit sets the data length of the error correcting code in accordance with a signal input from an external via a bus for communication with the external.

4. The transmitting device according to claim 1, wherein
the setting unit is a processor and sets the data length of the error correcting code in accordance with a predetermined program.

5. The transmitting device according to claim 1, wherein
the setting unit is a processor and sets the data length of the error correcting code, decided by a processor of the receiving device, depending on status of error correction of the transmission-subject data based on information transmitted from the processor of the receiving device.

6. A transmitting method comprising:
setting data length of an error correcting code whose data length is variable;
calculating the error correcting code having the set data length for transmission-subject data as an information word; and
transmitting, to a receiving device existing in the same device, coded data that is data of a codeword obtained by adding the error correcting code obtained by the calculation to the transmission-subject data.

7. A program for causing a computer to execute processing comprising:
setting data length of an error correcting code whose data length is variable;
calculating the error correcting code having the set data length for transmission-subject data as an information word; and
transmitting, to a receiving device existing in the same device, coded data that is data of a codeword obtained by adding the error correcting code obtained by the calculation to the transmission-subject data.

8. A receiving device comprising:
a receiving unit configured to receive coded data transmitted from a transmitting device that is provided in the same device, the transmitting device setting data length of an error correcting code whose data length is variable, calculating the error correcting code having the set data length for transmission-subject data as an information word and transmitting the coded data that is data of a codeword obtained by adding the error correcting code obtained by the calculation to the transmission-subject data;
a setting unit configured to set the data length of the error correcting code;
an error correcting unit configured to perform error correction of the transmission-subject data based on the error correcting code that is included in the coded data and has the data length set by the setting unit; and
a processing unit configured to execute processing of the transmission-subject data resulting from the error correction.

9. The receiving device according to claim 8, wherein
the setting unit sets the data length of the error correcting code in accordance with a signal input from an external to an input terminal of a circuit configuring the receiving device.

10. The receiving device according to claim 8, wherein
the setting unit sets the data length of the error correcting code in accordance with a signal input from an external via a bus for communication with the external.

11. The receiving device according to claim 8, wherein
the setting unit is a processor and sets the data length of the error correcting code in accordance with a predetermined program.

12. The receiving device according to claim 8, wherein
the setting unit is a processor and decides the data length of the error correcting code based on status of the error correction by the error correcting unit, and the setting unit transmits information representing the decided data length to a processor that is included in the transmitting device and sets the data length of the error correcting code in the transmission device.

13. A receiving method comprising:
receiving coded data transmitted from a transmitting device that is provided in the same device, the transmitting device setting data length of an error correcting code whose data length is variable, calculating the error correcting code having the set data length for transmission-subject data as an information word and transmitting the coded data that is data of a codeword obtained by adding the error correcting code obtained by the calculation to the transmission-subject data;
setting the data length of the error correcting code;
performing error correction of the transmission-subject data based on the error correcting code that is included in the coded data and has the set data length; and
executing processing of the transmission-subject data resulting from the error correction.

14. A program for causing a computer to execute processing comprising:
receiving coded data transmitted from a transmitting device that is provided in the same device, the transmitting device setting data length of an error correcting code whose data length is variable, calculating the error correcting code having the set data length for transmission-subject data as an information word and transmitting the coded data that is data of a codeword obtained by adding the error correcting code obtained by the calculation to the transmission-subject data;
setting the data length of the error correcting code;
performing error correction of the transmission-subject data based on the error correcting code that is included in the coded data and has the set data length; and
executing processing of the transmission-subject data resulting from the error correction.

15. A transmission system comprising: a transmitting device; and a receiving device, wherein the transmitting device includes
a setting unit that sets data length of an error correcting code whose data length is variable,
an error correcting code calculator that calculates the error correcting code having the data length set by the setting unit for transmission-subject data as an information word, and
a transmitting unit that transmits, to the receiving device, coded data that is data of a codeword obtained by adding the error correcting code obtained by calculation by the error correcting code calculator to the transmission-subject data, and
wherein the receiving device includes
a receiving unit that receives the coded data,
a setting unit that sets the data length of the error correcting code,
an error correcting unit that performs error correction of the transmission-subject data based on the error correcting code that is included in the coded data and has the data length set by the setting unit, and
a processing unit that executes processing of the transmission-subject data resulting from the error correction.
